# EUROPÄISCHE PATENTSCHRIFT

(11) **EP 2 981 736 B1**
(45) Veröffentlichungstag und Bekanntmachung des Hinweises auf die Patenterteilung: **03.05.2017**
(21) Anmeldenummer: 14713450.6
(22) Anmeldetag: 27.03.2014
(51) Int. Cl.: F16G 13/16, H02G 3/04

(54) **ENERGIEFÜHRUNGSKETTE**
ENERGY GUIDING CHAIN
CHAÎNE DE GUIDAGE D'ÉLÉMENTS DE TRANSPORT D'ÉNERGIE

(30) Priorität: 05.04.2013 DE 202013101462 U
(43) Veröffentlichungstag der Anmeldung: 10.02.2016
(73) Patentinhaber: Igus GmbH, 51147 Köln (DE)
(72) Erfinder: HERMEY, Andreas, 53773 Hennef (DE)
(74) Vertreter: Lippert Stachow Patentanwälte Rechtsanwälte
(86) Internationale Anmeldenummer: PCT/EP2014/056132
(87) Internationale Veröffentlichungsnummer: WO 2014/161761

(56) Entgegenhaltungen:
- DE-U1-202011 004 762
- JP-U- S62 101 277
- US-A1- 2011 308 043

## Beschreibung

Die Erfindung betrifft eine Energieführungskette zur Führung von Kabeln, Schläuchen und dergleichen von einer ersten Anschlussstelle zu einer zweiten Anschlussstelle, die relativ zur ersten Anschlussstelle ortsveränderlich ist, bestehend aus einer Vielzahl gegeneinander über einen bestimmten Verschwenkwinkel verschwenkbarer Kettenglieder aus Kunststoff, die jeweils zwei Seitenlaschen umfassen, die zum Ketteninneren weisende Innenseiten, nach außen weisende Außenseiten und dazu senkrecht und in Längsrichtung der Seitenlaschen verlaufende Schmalseiten aufweisen, wobei die Seitenlaschen quer zu ihrer Längsrichtung gegenüberliegende Laschenstränge bilden und mindestens einige der gegenüberliegenden Seitenlaschen durch Querstege miteinander verbunden sind, von denen wenigstens einige an mindestens einem ihrer Enden einen Lagerbereich aufweisen, der mit einer an der zu dem genannten Ende des Querstegs weisenden Seitenlasche angeordneten Lageraufnahme gelenkig zum Verschwenken des Querstegs zwischen einer geschlossenen und einer geöffneten Position zusammenwirkt, wobei der Lagerbereich mindestens einen im Wesentlichen zylindrisch ausgebildeten Lagerzapfen aufweist, dessen Achse in Längsrichtung der Seitenlasche gerichtet ist, und die Lageraufnahme eine taschenförmige Zapfenaufnahme mit einem zum Lagerzapfen korrespondierenden, im Wesentlichen zylindrischen Raum aufweist, in den der Lagerzapfen einsetzbar ist.

Eine Energieführungskette dieser Art ist aus der in DE 20 2011 004 762 U bekannt. Bei dieser Kette weist der Quersteg an seinen beiden Enden in deren mittleren Bereich Lagerbereiche auf, die als Lagerzapfen ausgebildet sind. An der Innenseite der Seitenlaschen sind in der Nähe ihrer Schmalseiten Lageraufnahmen angeordnet, die Zapfenaufnahmen aufweisen, in die die Lagerzapfen des Querstegs einsetzbar sind. Die Lageraufnahmen stehen an den Innenseiten der Seitenlaschen des Ketteninneren vor.

Bei der bekannten Energieführungskette weisen die Seitenlaschen jeweils eine Schnappeinrichtung mit einer Schnappnase auf, die mit einer an dem Befestigungsende des Querstegs angeordneten Rastleiste zusammenwirkt, so dass in der Raststellung des Querstegs die Schnappnase die Rastleiste übergreift. Dabei ist die Rastleiste radial außerhalb der gemeinsamen Achse der Lagerzapfen zur benachbarten Seitenlasche hin weisend angeordnet und die Schnappeinrichtung in der Raststellung des Querstegs an der zur benachbarten Seitenlasche hin weisenden Seite der Rastleiste so angeordnet, dass beim Verschwenken des Querstegs um die gemeinsame Achse der in die Zapfenaufnahmen eingesetzten Lagerzapfen bis in die vollständig geöffnete Position des Querstegs die Rastleiste unterhalb der Schnappnase hinweg bewegbar ist.

Weiterhin weisen die Kettenglieder der bekannten Energieführungskette sowohl obere als auch untere Querstege auf, die an ihren Befestigungsenden die vorstehend beschriebenen Lagerbereiche mit jeweils einer Rastleiste aufweisen, die mit den vorstehend beschriebenen Lageraufnahmen mit jeweils einer Schnappeinrichtung zusammen wirken.

Zum Einlegen oder Austauschen von Leitungen kann die bekannte Energieführungskette geöffnet werden, indem zum Beispiel die oberen Querstege an einer Seite von den Seitenlaschen gelöst und aufgrund ihrer gelenkigen Verbindung mit den gegenüberliegenden Seitenlaschen in die vollständig geöffnete Position verschwenkt werden. Insbesondere im geöffneten Zustand ist die Winkelstabilität der Seitenlaschen gegenüber den sie verbindenden unteren Querstegen aufgrund deren gelenkiger Verbindung mit den Seitenlaschen eingeschränkt.

Der vorliegenden Erfindung liegt die Aufgabe zugrunde, die Winkelstabilität der Seitenlaschen bei an einer Seite geöffneten Querstegen zu verbessern.

Die Aufgabe wird erfindungsgemäß dadurch gelöst, dass die im Wesentlichen zylindrisch ausgebildeten Lagerzapfen an den Befestigungsenden der Querstege einen ersten abgeflachten Abschnitt auf ihrer Zylindermantelfläche aufweisen, wobei der erste abgeflachte Abschnitt parallel zur Achse des im Wesentlichen zylindrischen Lagerzapfens verläuft, und der den Lagerzapfen aufnehmende, im Wesentlichen zylindrische Raum der Lageraufnahme an der benachbarten Seitenlasche einen abgeflachten Abschnitt aufweist, wobei dieser und der erste abgeflachte Abschnitt des Lagerzapfens so zueinander angeordnet sind, dass in der geschlossenen Position des Querstegs der abgeflachte Abschnitt des zylindrischen Raums und der erste abgeflachte Abschnitt des im Wesentlichen zylindrisch ausgebildeten Lagerzapfens sich gegenüberliegen.

Aufgrund der erfindungsgemäßen Ausbildung des Lagerzapfens und der diesen aufnehmenden Zapfenaufnahme wird eine besonders stabile Lagerung eines Querstegs in seiner geschlossenen Position senkrecht zur Seitenlasche gewährleistet. Zum Verschwenken der Seitenlaschen nach außen in eine zu den Querstegen parallele Lage, die unter Umständen wünschenswert ist, bedarf es einer erheblichen Kraft, die bei normaler Handhabung der Energieführungskette zum Einlegen und Austauschen von Leitungen nicht erreicht wird.

Im Querschnitt bildet der erste abgeflachte Abschnitt des Lagerzapfens eine Sekante des Umfangkreises des zylinderförmigen Lagerzapfens. Die Länge der Sekante ist vorzugsweise so bemessen, dass der dazu gehörige Kreissektor einen Winkel von mindestens 40° aufweist.

Der abgeflachte Abschnitt des im Wesentlichen zylindrischen Raums der Zapfenaufnahme bildet im Querschnitt ebenfalls eine Sekante des Umfangkreises des zylindrischen Raums.

Vorzugsweise liegen in der geschlossenen Position des Querstegs der erste abgeflachte Abschnitt des Lagerzapfens und der abgeflachte Abschnitt des im Wesentlichen zylindrischen Raums der Zapfenaufnahme aneinander.

Bei einer vorteilhaften Weiterentwicklung der Erfindung weist der Lagerzapfen einen zweiten abgeflachten Abschnitt auf, der parallel zur Achse des im Wesentlichen zylindrischen Lagerzapfens verläuft, wobei der zweite abgeflachte Abschnitt am Lagerzapfen so angeordnet ist, dass er in der vollständig geöffneten Position des Querstegs dem abgeflachten Abschnitt des im Wesentlichen zylindrischen Raumes der Zapfenaufnahme gegenüberliegt.

Aufgrund dieser Maßnahme befindet sich der Quersteg in seiner vollständig geöffneten Position ebenfalls in einer stabilen Rastlage zur Seitenlasche.

Im Querschnitt bildet der zweite Abschnitt des Lagerzapfens eine Sekante des Umfangkreises des im Wesentlichen zylinderförmigen Lagerzapfens. Die Länge der Sekante ist vorzugsweise so bemessen, dass der dazu gehörige Kreissektor einen Winkel von mindestens 40° aufweist.

Die zum ersten und zweiten abgeflachten Abschnitt gehörenden Kreissektoren können unterschiedliche Winkel aufweisen, so dass unterschiedliche Kräfte erforderlich sind, um den Quersteg aus seiner Raststellung in seiner geschlossenen Position und aus seiner Raststellung in seiner vollständig geöffneten Position heraus zu bewegen.

Der im Wesentlichen zylindrische Raum der Zapfenaufnahme kann zur benachbarten Schmalseite der Seitenlasche hin durch eine Einführöffnung zugänglich sein, gegenüber der der im Wesentlichen zylindrische Raum erweitert ist, so dass der Lagerzapfen in der Zapfenaufnahme einrastbar ist.

Der abgeflachte Abschnitt des im Wesentlichen zylindrischen Raums kann an der zur Außenseite der Seitenlasche benachbarten Wand der Zapfenaufnahme angeordnet sein.

Der abgeflachte Abschnitt kann weiterhin parallel zur Außenseite der Seitenlasche angeordnet sein. Vorzugsweise ist er fluchtend mit der zur Außenseite der Seitenlasche benachbarten Wand der Einführöffnung angeordnet.

In einer bevorzugten Ausbildung ist der erste abgeflachte Abschnitt zu dem zweiten abgeflachten Abschnitt des im Wesentlichen zylindrisch ausgebildeten Lagerzapfens in einem Winkel größer als 90° angeordnet, der beim Verschwenken des Querstegs zwischen seiner geschlossenen und vollständig geöffneten Position überstrichen wird.

Vorteilhafterweise weist der Quersteg an seinem Befestigungsende einen Ansatz auf, an dem zwei eine gemeinsame Achse aufweisende Lagerzapfen angeordnet sind, die jeweils in eine an der Innenseite der Seitenlasche angeordnete taschenförmige Zapfenaufnahme einsetzbar sind.

Die weitere konstruktive Ausbildung der erfindungsgemäßen Energieführungskette kann zumindest teilweise die Merkmale der aus der DE 20 2011 004 762 U bekannten Energieführungskette einschließen.

Ausführungsbeispiele der Erfindung werden im Folgenden anhand der Zeichnung näher beschrieben.

In der Zeichnung zeigen:
Fig. 1 eine perspektivische Ansicht eines drei aneinander gefügte Kettenglieder umfassenden Abschnittes eines ersten Ausführungsbeispiels einer Energieführungskette,
Fig. 2 eine stirnseitige Ansicht des in Figur 1 dargestellten Abschnittes in Richtung des Pfeils II,
Fig.3 eine Seitenansicht des in Figur 1 dargestellten Abschnittes in Richtung des Pfeils III,
Fig. 4 eine Draufsicht auf den in Figur 1 dargestellten Abschnitt von oben,
Fig. 5 eine perspektivische Ansicht eines oberen Querstegs des in Figur 1 dargestellten Abschnittes,
Fig. 6 eine vergrößerte Ansicht des in Figur 5 umrandeten Bereichs,
Fig. 7 eine perspektivische Ansicht eines drei aneinander gefügte Kettenglieder umfassenden Abschnitts eines zweiten Ausführungsbeispiels einer Energieführungskette,
Fig. 8 eine stirnseitige Ansicht des in Figur 7 dargestellten in Richtung des Pfeils VIII,
Fig. 9 eine Seitenansicht des in Figur 7 dargestellten Abschnitts in Richtung des Pfeils IX,
Fig. 10 eine Draufsicht auf den in Figur 7 dargestellten Abschnitt von oben,
Fig. 11 einen Schnitt längs der Linie XI in Figur 9 und
Fig. 12 einen Schnitt längs der Linie XII in Fig. 9.

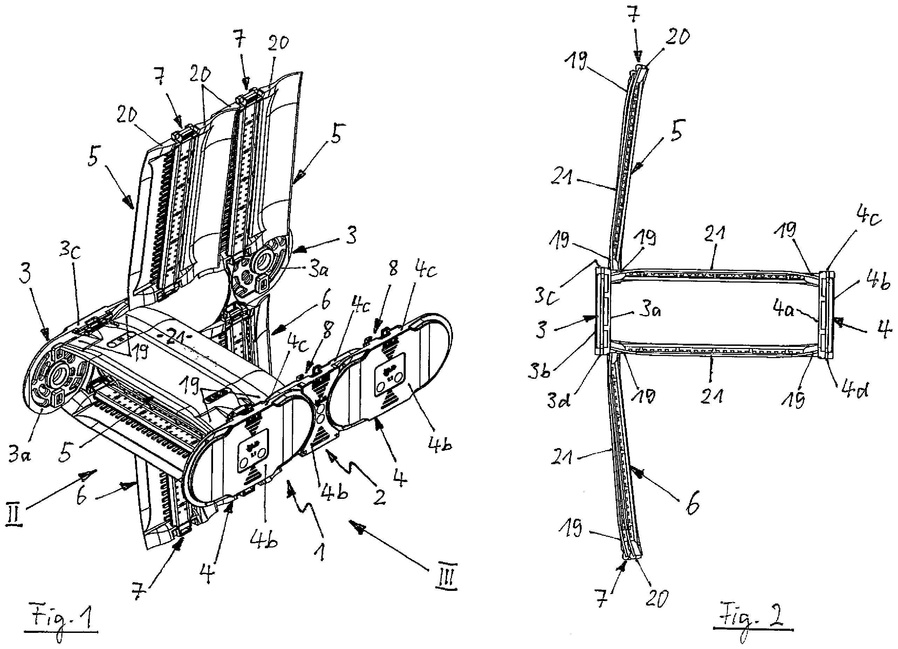

Der in den Figuren 1 - 6 gezeigte Abschnitt einer Energieführungskette besteht aus drei Kettengliedern, wobei die äußeren Kettenglieder 1 gegenüberliegende Seitenlaschen 3 aufweisen, die die Seitenlaschen 4 des inneren Kettenglieds 2 von außen überlappen. Die Seitenlaschen 3 und 4 bilden quer zu ihrer Längsrichtung gegenüberliegende Laschenstränge, die sich über die gesamte Länge der Energieführungskette fortsetzen.

Die Energieführungskette setzt sich aus einer Vielzahl gegeneinander über einen bestimmten Verschwenkwinkel verschwenkbarer Kettenglieder 1, 2 zusammen und erstreckt sich von einer (in der Zeichnung nicht dargestellten) ersten Anschlussstelle zu einer (in der Zeichnung nicht dargestellten) zweiten Anschlussstelle, die relativ zur ersten Anschlussstelle ortsveränderlich ist.

Wie aus Figur 1 hervorgeht, weist jede Seitenlasche 3, 4 eine zum Ketteninneren hin weisende Innenseite 3a, 4a, eine nach außen weisende Außenseite 3b, 4b und dazu senkrecht und in Längsrichtung der Seitenlaschen verlaufende Schmalseiten 3c, 3d, 4c, 4d auf.

Die gegenüberliegenden Seitenlaschen 3, 4 sind durch obere Querstege 5 und untere Querstege 6 miteinander verbindbar. Die oberen Querstege sind als Deckelwände und die unteren Querstege als Bodenwände ausgebildet. Die Deckelwände benachbarter Kettenglieder können sich über den gesamten Verschwenkwinkel überlappen, ebenso die Bodenwände, und können somit eine geschlossene Energieführungskette bilden. In den Zeichnungsfiguren 1 - 4 sind die Querstege 5 und 6 des vorderen Kettenglieds 1 in geschlossener Position dargestellt, während die Querstege 5 und 6 der beiden dahinter liegenden Kettenglieder 2 und 1 in ihrer geöffneten Position dargestellt sind.

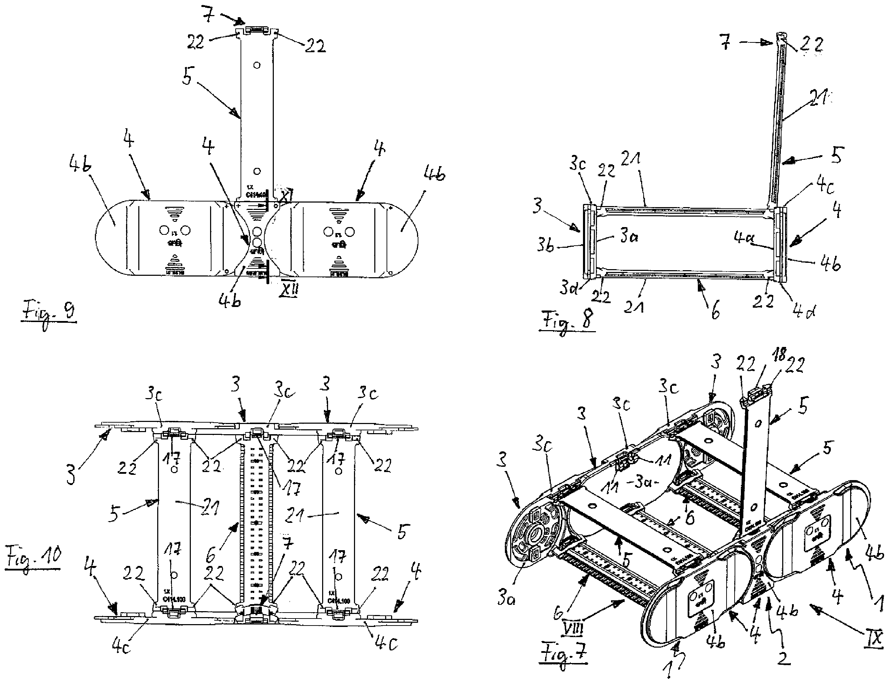

Der in den Figuren 7 bis 10 gezeigte Abschnitt einer Energieführungskette unterscheidet sich von dem ersten Ausführungsbeispiel nur dadurch, dass die oberen Querstege 5 und unteren Querstege 6 benachbarter Kettenglieder mit einem Abstand zueinander angeordnet sind. Sie bilden somit eine in den Zwischenräumen zwischen den Querstegen 5 und 6 offene Energieführungskette.

Wenn im Folgenden nicht auf unterschiedliche Ausbildungen der Querstege hingewiesen wird, werden mit den Bezugszeichen 5 und 6 beide Arten von Querstegen beschrieben.

Die Querstege 5, 6 weisen an ihren beiden Enden jeweils einen Lagerbereich 7 auf, der mit einer an der zu dem genannten Ende des Querstegs weisenden Seitenlasche 3 bzw. 4 angeordneten Lageraufnahme 8 gelenkig zum Verschwenken des Querstegs zwischen seiner geschlossenen und geöffneten Position zusammenwirkt.

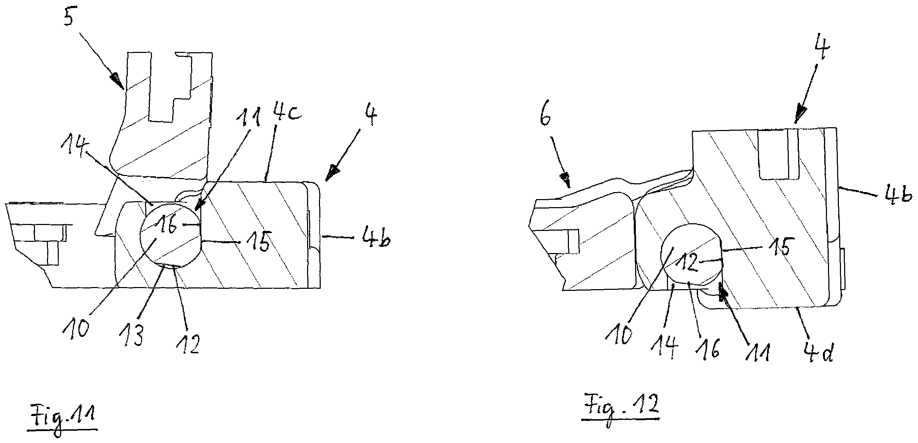

Die Lagerzapfen 10 sind so ausgelegt, dass sie jeweils in eine an der Lageraufnahme 8 angeordnete taschenförmige Zapfenaufnahme 11 einsetzbar sind, wie in den Figuren 11 und 12 gezeigt ist.

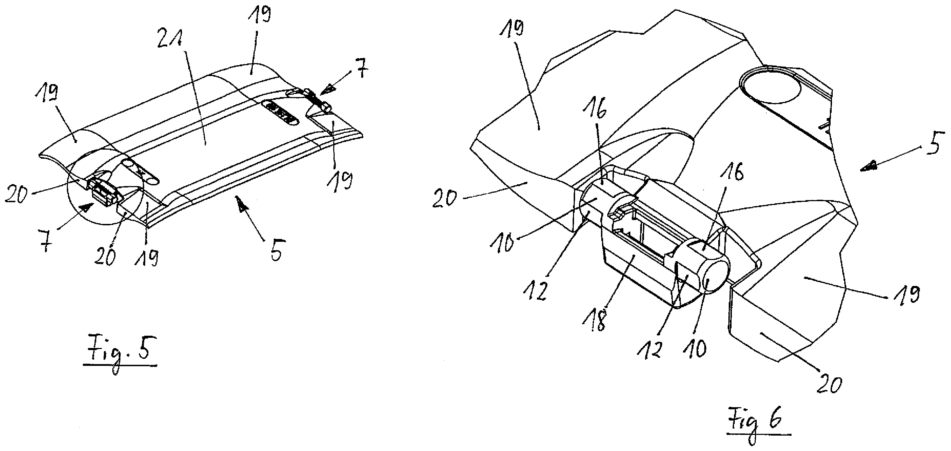

Wie insbesondere den Figuren 6, 11 und 12 zu entnehmen ist, sind die Lagerzapfen 10 im Wesentlichen zylindrisch ausgebildet mit einem ersten abgeflachten Abschnitt 12 auf ihrer Zylindermantelfläche, der parallel zur Achse der Lagerzapfen 10 verläuft. Die dem Lagerzapfen 10 zugeordnete Zapfenaufnahme 11 weist einen zum Lagerzapfen 10 korrespondierenden zylindrischen Raum 13 auf, der gegenüber einer Einführöffnung 14 für den Lagerzapfen 10 erweitert ist, so dass der Lagerzapfen 10 in der Zapfenaufnahme 11 einrastbar ist. Die Wand des zylindrischen Raums 13 weist einen zum ersten abgeflachten Abschnitt des Lagerzapfens 10 korrespondierenden abgeflachten Abschnitt 15 auf, wobei dieser und der erste abgeflachte Abschnitt 12 des Lagerzapfens 10 so zueinander angeordnet sind, dass in der geschlossenen Position des Querstegs 5, 6 der abgeflachte Abschnitt 15 der Zapfenaufnahme 11 und der erste abgeflachte Abschnitt 12 des Lagerzapfens 10 aneinander anliegen.

Der Lagerzapfen 10 weist, wie in den Figuren 11 und 12 gezeigt ist, einen zweiten abgeflachten Abschnitt 16 auf, der parallel zur Achse des Lagerzapfens 10 verläuft, wobei der zweite abgeflachte Abschnitt 16 am Lagerzapfen 10 so angeordnet ist, dass er in der vollständig geöffneten Position des Querstegs 5, 6 an dem abgeflachten Abschnitt 15 der Zapfenaufnahme 11 anliegt. Im Querschnitt bilden die abgeflachten Abschnitte 12 und 16 des Lagerzapfens 10 Sekanten des Umfangkreises des im Wesentlichen zylinderförmigen Lagerzapfens 10 und der abgeflachte Abschnitt 15 der Zapfenaufnahme 11 eine Sekante des Umfangkreises des im Wesentlichen zylindrischen Raums 13 der Zapfenaufnahme 11.

Aufgrund der vorstehend beschriebenen Ausbildung des Lagerzapfens 10 und der Zapfenaufnahme 11 befindet sich der Lagerzapfen 10 in vollständig geöffneter Position des Querstegs 5, 6 und in geschlossener Position des Querstegs 5, 6 jeweils in einer Raststellung in der Zapfenaufnahme 11 gemäß den Figuren 11 bzw. 12.

Der abgeflachte Abschnitt 15 des im Wesentlichen zylindrischen Raums 13 ist an der zur Außenseite 3 b, 4b der Seitenlasche 3 bzw. 4 benachbarten Wand 17 der Zapfenaufnahme 11 angeordnet. Weiterhin ist der abgeflachte Abschnitt 15 parallel und zur Außenseite 3b, 4b, der Seitenlasche 3 bzw. 4 angeordnet, und zwar fluchtend mit der zur Außenseite 3b, 4b der Seitenlasche 3, bzw. 4 benachbarten Wand 18 der Einführöffnung 14 angeordnet.

Wie ebenfalls aus den Figuren 11 und 12 hervorgeht, sind der erste abgeflachte Abschnitt 12 und der zweite abgeflachte Abschnitt 16 des Lagerzapfen 10 in einem Winkel größer als 90° zueinander angeordnet, der beim Verschwenken des Querstegs 5, 6 zwischen seiner geschlossenen und vollständig geöffneten Position überstrichen wird.

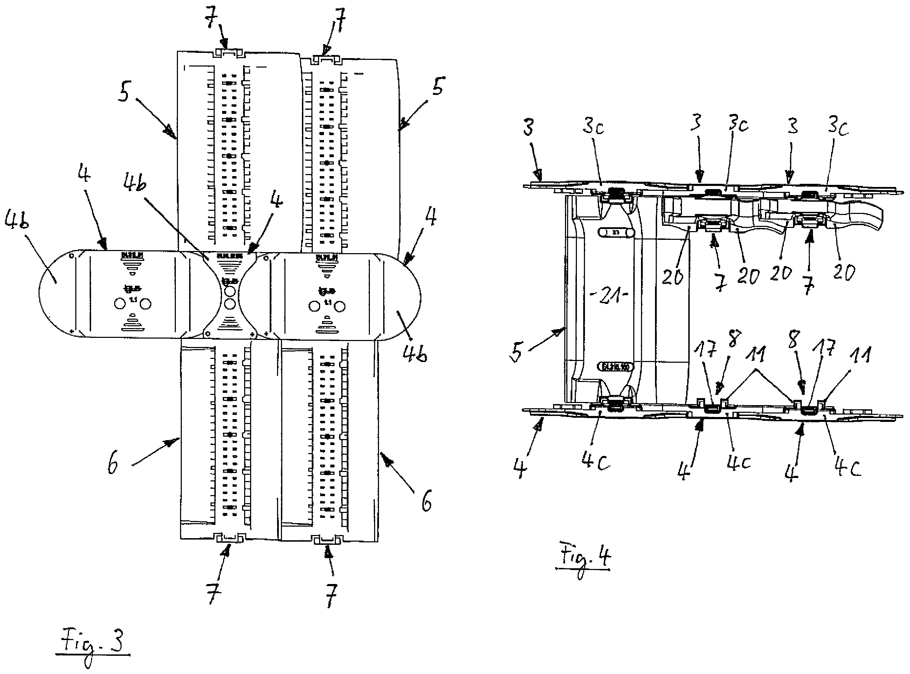

Zur Befestigung der beiden Enden der Querstege 5, 6 an den benachbarten Seitenlaschen 3, 4 weisen diese im Bereich ihrer oberen Schmalseiten 3c, 4c und ihrer unteren Schmalseite 3d, 4d zwischen den Zapfenaufnahmen 11 eine Schnappeinrichtung mit einer Schnappnase 17 auf, wie aus den Figuren 4, 7 und 10 hervorgeht. Die Schnappnase 17 wirkt mit einer am betreffenden Befestigungsende des Querstegs 5, 6 angeordneten Rastleiste 18 zusammen, so dass in der Raststellung des Querstegs und seiner geschlossenen Position bezüglich der gegenüberliegenden Seitenlasche 3, 4 die Schnappnase 17 die Rastleiste 18 übergreift. Entsprechend der Anordnung der Schnappnase 17 zwischen dem Zapfenaufnahme 11 ist die Rastleiste 18 im Bereich zwischen dem Lagerbereich des Zapfen 10 zum Ketteninneren hin versetzt und radial außerhalb der gemeinsamen Achse der Lagerzapfen 10 zur benachbarten Seitenlasche 3, 4 hin weisend angeordnet.

Die Schnappeinrichtung ist an der benachbarten Seitenlasche 3, 4, der Rastleiste 18 gegenüberliegend, so angeordnet, dass beim Verschwenken des Querstegs 5, 6 um die gemeinsame Achse der in die Zapfenaufnahmen 11 eingesetzten Lagerzapfen 10 bis in die vollständig geöffnete Position des Querstegs 5, 6 die Rastleiste 18 unterhalb der Schnappnase 17 hin weg bewegbar ist.

Jeder Quersteg 5, 6 weist an seinem Befestigungsende außerhalb des Lagerbereichs 7 einen Anlagebereich 19 auf, der mit einer Anlagefläche 20 an der Innenseite 3a, 4a der Seitenlasche 3 bzw. 4 in der geschlossenen Position des Querstegs 5, 6 anliegt.

Um ein Öffnen des Querstegs 5, 6 zu ermöglichen, ist bei dem in den Figuren 1 bis 6 dargestellten Ausführungsbeispiel einer an allen vier Seiten schließbaren Kette vorgesehen, dass die vom Ketteninneren nach außen weisende Seite 21 des Anlagebereichs 19 des Querstegs 5, 6 zu seiner Anlagefläche 20 hin konvex gekrümmt ist. Statt der konvexen Krümmung kann auch eine lineare Neigung des Anlagebereichs 19 zur Anlagefläche 20 hin vorgesehen sein. Mit der Innenseite 3a, 4a der benachbarten Seitenlasche 3 bzw. 4 schließt der Anlagebereich 19 an der Stelle der Anlagefläche einen Winkel kleiner als 90° ein, so dass sich der Quersteg 5, 6 aus seiner geschlossenen Position bis in seine vollständige geöffnete Position ungehindert durch Bereiche an der Innenseite 3a, 4a der Seitenlasche 3 bzw. 4 aufschwenken lässt.

Bei dem in den Figuren 7 bis 10 dargestellten Ausführungsbeispiel einer offenen Energieführungskette weisen die an den beiden Seiten der Lagerzapfen 10 angeordneten Anlagebereiche 22 eine zum Ketteninneren hin gerichtete Kröpfung auf, so dass beim Verschwenken des Querstegs 5, 6 in die in Figur 7 gezeigte vollständig geöffnete Position der ins Ketteninnere weisende Rand der Schmalseiten 3c, 3d bzw. 4c, 4d der Seitenlasche 3 bzw. 4 in den gekröpften Anlagebereich 22 des Querstegs 5, 6 eingreift. Die innenliegende Seite der Kröpfung des Anlagebereichs 22 dient als Anschlagfläche gegen die benachbarte Schmalseite 3c, 3d bzw. 4c, 4d der Seitenlasche 3 bzw. 4 und somit als zusätzliche Begrenzung des Verschwenkwinkels des Querstegs 5, 6.

### Bezugzeichenliste

- 1: Kettenglied
- 2: Kettenglied
- 3: Seitenlasche
- 3a: Innenseite
- 3b: Außenseite
- 3c: Schmalseite
- 3d: Schmalseite
- 4: Seitenlasche
- 4a: Innenseite
- 4b: Außenseite
- 4c: Schmalseite
- 4d: Schmalseite
- 5: oberer Quersteg
- 5a: teleskopartig überlappende Fläche
- 5b: teleskopartig überlappende Fläche
- 6: unterer Quersteg
- 6a: teleskopartig überlappende Fläche
- 6b: teleskopartig überlappende Fläche
- 7: Lagerbereich
- 8: Lageraufnahme
- 9: Ansatz
- 10: Lagerzapfen
- 11: Zapfenaufnahme
- 12: erster abgeflachter Abschnitt
- 13: zylindrischer Raum
- 14: Einführöffnung
- 15: abgeflachter Abschnitt
- 16: zweiter abgeflachter Abschnitt
- 17: Schnappnase
- 18: Rastleiste
- 19: Anlagebereich
- 20: Anlagefläche
- 21: nach außen weisende Seite
- 22: Anlagebereich

## Patentansprüche

1. Energieführungskette zur Führung von Kabeln, Schläuchen und dergleichen von einer ersten Anschlussstelle zu einer zweiten Anschlussstelle, die relativ zur ersten Anschlussstelle ortsveränderlich ist, bestehend aus einer Vielzahl gegeneinander über einen bestimmten Verschwenkwinkel verschwenkbarer Kettenglieder (1, 2) aus Kunststoff, die jeweils zwei Seitenlaschen (3, 4) umfassen, die zum Ketteninneren hin weisende Innenseiten (3a, 4a), nach außen weisende Außenseiten (3b, 4b) und dazu senkrecht und in Längsrichtung der Seitenlaschen (3, 4) verlaufende Schmalseiten (3c, 3d, 4c, 4d) aufweisen, wobei die Seitenlaschen (3, 4) quer zu ihrer Längsrichtung gegenüberliegende Laschenstränge bilden und mindestens einige der gegenüberliegenden Seitenlaschen (3, 4) durch Querstege (5, 6) miteinander verbunden sind, von denen wenigstens einige an mindestens einem ihrer Enden einen Lagerbereich (7) aufweisen, der mit einer an der zu dem genannten Ende des Querstegs (5, 6) weisenden Seitenlasche (3, 4) angeordneten Lageraufnahme (8) gelenkig zum Verschwenken des Querstegs (5, 6) zwischen einer geschlossenen und einer geöffneten Position zusammenwirkt, wobei der Lagerbereich (7) mindestens einen im Wesentlichen zylindrisch ausgebildeten Lagerzapfen (10) aufweist, dessen Achse in Längsrichtung der Seitenlasche (3, 4 gerichtet ist, und die Lageraufnahme (8) eine taschenförmige Zapfenaufnahme (11) mit einem zum Lagerzapfen (10) korrespondierenden, im Wesentlichen zylindrischen Raum (13) aufweist, in den der Lagerzapfen (10) einsetzbar ist, **dadurch gekennzeichnet, dass** der im Wesentlichen zylindrisch ausgebildete Lagerzapfen (10) an dem Befestigungsende des Querstegs (5, 6) einen ersten abgeflachten Abschnitt (12) auf seiner Zylindermantelfläche aufweist, wobei der erste abgeflachte Abschnitt (12) parallel zur Achse des im Wesentlichen zylindrischen Lagerzapfens (10) verläuft, und der den Lagerzapfen (10) aufnehmende, im Wesentlichen zylindrische Raum (13) der Lageraufnahme (8) an der benachbarten Seitenlasche (3, 4) einen abgeflachten Abschnitt (15) aufweist, wobei dieser und der erste abgeflachte Abschnitt (12) des Lagerzapfens (10) so zueinander angeordnet sind, dass in der geschlossenen Position des Querstegs (5, 6) der abgeflachte Abschnitt (15) des zylindrischen Raums (13) und der erste abgeflachte Abschnitt (12) des im Wesentlichen zylindrisch ausgebildeten Lagerzapfens (10) sich gegenüberliegen.

2. Energieführungskette nach Anspruch 1, **dadurch gekennzeichnet, dass** der im Querschnitt eine Sekante des Umfangkreises des zylinderförmigen Lagerzapfens (10) bildende erste abgeflachte Abschnitt (12) so bemessen ist, dass der zur Sekante gehörige Kreissektor einen Winkel von mindestens 40° aufweist.

3. Energieführungskette nach Anspruch 1 oder 2, **dadurch gekennzeichnet, dass** in der geschlossenen Position des Querstegs (5, 6) der erste abgeflachte Abschnitt (12) des Lagerzapfens (10) und der abgeflachte Abschnitt (15) des im Wesentlichen zylindrischen Raums (13) der Zapfenaufnahme (11) aneinander liegen.

4. Energieführungskette nach einem der Ansprüche 1 bis 3, **dadurch gekennzeichnet, dass** der Lagerzapfen (10) einen zweiten abgeflachten Abschnitt (16) aufweist, der parallel zur Achse des im Wesentlichen zylindrischen Lagerzapfens (10) verläuft, wobei der zweite abgeflachte Abschnitt (16) am Lagerzapfen (10) so angeordnet ist, dass er in der vollständig geöffneten Position des Querstegs (5, 6) dem abgeflachten Abschnitt (15) des im Wesentlichen zylindrischen Raums (13) der Zapfenaufnahme (11) gegenüber liegt.

5. Energieführungskette nach einem der Anspruch 4, **dadurch gekennzeichnet, dass** der eine Sekante des Umfangkreises des im Wesentlichen zylinderförmigen Lagerzapfens (10) bildende zweite Abschnitt (16) so bemessen ist, dass der zu dieser Sekante gehörige Kreissektor einen Winkel von mindestens 40° aufweist.

6. Energieführungskette nach Anspruche 4 oder 5, **dadurch gekennzeichnet, dass** der erste abgeflachte Abschnitt (12) zu dem zweiten abgeflachten Abschnitt (16) des im Wesentlichen zylindrisch ausgebildeten Lagerzapfens (10) in einem Winkel größer als 90° angeordnet ist, der beim Verschwenken des Querstegs (5, 6) zwischen seiner geschlossenen und vollständig geöffneten Position überstrichen wird.

7. Energieführungskette nach einem der Ansprüche 1 bis 6, **dadurch gekennzeichnet, dass** der abgeflachte Abschnitt (15) des im Wesentlichen zylindrischen Raumes (13) an der zur Außenseite (3b, 4b) der Seitenlasche (3, 4) benachbarten Wand der Zapfenaufnahme (11) angeordnet ist.

8. Energieführungskette nach einem der Anspruch 7, **dadurch gekennzeichnet, dass** der abgeflachte Abschnitt (15) des im Wesentlichen zylindrischen Raums (13) parallel zur Außenseite (3b, 4b) der Seitenlasche (3, 4) angeordnet ist.

9. Energieführungskette nach einem der Ansprüche 1 bis 8, **dadurch gekennzeichnet, dass** der im Wesentlichen zylindrische Raum (13) der Zapfenaufnahme (11) zur benachbarten Schmalseite (3c, 3d, 4c, 4d) der Seitenlasche (3, 4) hin durch eine Einführöffnung (14) zugänglich ist, gegenüber der der im Wesentlichen zylindrische Raum (13) erweitert ist, so dass der Lagerzapfen (10) in den im Wesentlichen zylindrischen Raum (13) der Zapfenaufnahme (11) einrastbar ist.

10. Energieführungskette nach einem der Ansprüche 1 bis 9, **dadurch gekennzeichnet, dass** der Quersteg (5, 6) an seinem Befestigungsende einen Ansatz (9) aufweist, an dem zwei eine gemeinsame Achse aufweisende Lagerzapfen (10) angeordnet sind, die jeweils in eine an der Innenseite (3a, 4a) der Seitenlasche (3, 4) angeordnete taschenförmige Zapfenaufnahme (11) einsetzbar sind.

## Claims

1. Energy guiding chain for guiding cables, hoses and the like from a first connecting point to a second connecting point that moves relative to the first connecting point, comprising a plurality of plastic chain links (1, 2) that can be pivoted relative to each other over a certain pivoting angle, each of which comprises two side straps (3, 4) displaying inner sides (3a, 4a) facing towards the interior of the chain, outward-facing outer sides (3b, 4b) and narrow faces (3c, 3d, 4c, 4d) running perpendicularly to them and in the longitudinal direction of the side straps (3, 4), where the side straps (3, 4) form opposite strap strands transversely to their longitudinal direction, and at least some of the opposite side straps (3, 4) are connected to each other by cross-members (5, 6), at least some of which display a bearing area (7) on at least one of their ends that interacts with a bearing seat (8), located on the side strap (3, 4) facing towards said end of the cross-member (5, 6), in articulated fashion for pivoting the cross-member (5, 6) between a closed position and an opened position, where the bearing area (7) displays at least one journal (10) of essentially cylindrical design, the axis of which is oriented in the longitudinal direction of the side strap (3, 4), and the bearing seat (8) displays a pocket-shaped journal seat (11) with a space (13) that corresponds to the journal (10), is essentially cylindrical and into which the journal (10) can be inserted, **characterised in that** the essentially cylindrical journal (10) on the fastening end of the cross-member (5, 6) displays a first flattened section (12) on its lateral surface, where the first flattened section (12) lies parallel to the axis of the essentially cylindrical journal (10), and the essentially cylindrical space (13) of the bearing seat (8) on the adjacent side strap (3, 4), receiving the journal (10), displays a flattened section (15), where the latter and the first flattened section (12) of the journal (10) are arranged in such a way relative to each other that, in the closed position of the cross-member (5, 6), the flattened section (15) of the cylindrical space (13) and the first flattened section (12) of the essentially cylindrical,journal (10) are opposite each other.

2. Energy guiding chain according to Claim 1, **characterised in that** the first flattened section (12), forming a secant of the perimeter circle of the cylindrical journal (10) in the cross-section, is dimensioned in such a way that the circular sector associated with the secant displays an angle of at least 40°.

3. Energy guiding chain according to Claim 1 or 2, **characterised in that**, in the closed position of the cross-member (5, 6), the first flattened section (12) of the journal (10) and the flattened section (15) of the essentially cylindrical space (13) of the journal seat (11) lie against each other.

4. Energy guiding chain according to one of Claims 1 to 3, **characterised in that** the journal (10) displays a second flattened section (16), lying parallel to the axis of the essentially cylindrical journal (10), where the second flattened section (16) is located on the journal (10) in such a way that, in the fully opened position of the cross-member (5, 6), it lies opposite the flattened section (15) of the essentially cylindrical space (13) of the journal seat (11).

5. Energy guiding chain according to Claim 4, **characterised in that** the second flattened section (16), forming a secant of the perimeter circle of the essentially cylindrical journal (10), is dimensioned in such a way that the circular sector associated with the secant displays an angle of at least 40°.

6. Energy guiding chain according to Claim 4 or 5, **characterised in that** the first flattened section (12) is arranged relative to the second flattened section (16) of the essentially cylindrical journal (10) at an angle greater than 90°, which is swept when pivoting the cross-member (5, 6) between its closed and fully opened positions.

7. Energy guiding chain according to one of Claims 1 to 6, **characterised in that** the flattened section (15) of the essentially cylindrical space (13) is located on the wall of the journal seat (11) adjacent to the outer side (3b, 4b) of the side strap (3, 4).

8. Energy guiding chain according to Claim 7, **characterised in that** the flattened section (15) of the essentially cylindrical space (13) is located parallel to the outer side (3b, 4b) of the side strap (3, 4).

9. Energy guiding chain according to one of Claims 1 to 8, **characterised in that** the essentially cylindrical space (13) of the journal seat (11) is accessible towards the adjacent narrow face (3c, 3d, 4c, 4d) of the side strap (3, 4) through an insertion opening (14), in relation to which the essentially cylindrical space (13) is wider, such that the journal (10) can be snapped into the essentially cylindrical space (13) of the journal seat (11).

10. Energy guiding chain according to one of Claims 1 to 9, **characterised in that** the cross-member (5, 6) displays a shoulder (9) on its fastening end, on which two journals (10) displaying a common axis are located, each of which can be inserted into a pocket-shaped journal seat (11) located on the inner side (3a, 4a) of the side strap (3, 4).

## Revendications

1. Chaîne de guidage d'énergie pour guider des câbles, des flexibles ou des conducteurs similaires d'un un premier point de raccordement vers un deuxième point de raccordement dont le lieu est variable par rapport au premier point de raccordement, constituée d'une pluralité de maillons de chaîne (1, 2) en matière plastique qui peuvent pivoter les uns par rapport aux autres sur un certain angle de pivotement, et qui respectivement comportent deux éclisses latérales (3, 4) présentant des faces intérieures (3a, 4a) orientées vers l'intérieur de la chaîne, des faces extérieures (3b, 4b) orientées vers l'extérieur et des faces étroites (3c, 3d, 4c, 4d) s'étendant perpendiculairement à celles-ci et dans la direction longitudinale des éclisses latérales (3, 4), dans laquelle les éclisses latérales (3, 4) forment des cordons d'éclisses opposés transversalement à leur direction longitudinale et au moins certaines des éclisses latérales (3, 4) opposées sont interconnectées par des traverses dont au moins certaines présentent, sur au moins une de leur extrémités, une zone de support (7) qui coopère de manière articulée avec un logement de support (8) disposé à l'éclisse latérale (3, 4) orientée vers ladite extrémité de la traverse (5, 6), pour pivoter la traverse (5, 6) entre une position fermée et une position ouverte, ladite zone de support (7) présentant au moins un pivot (10) sensiblement cylindrique dont l'axe est orienté dans la direction longitudinale de l'éclisse latérale (3, 4), et le logement de support (8) comportant un logement de pivot (11) en forme de poche avec un espace (13) sensiblement cylindrique correspondant au pivot (10) dans lequel peut être inséré ledit pivot (10), **caractérisée en ce que** le pivot (10) de forme sensiblement cylindrique présente sur l'extrémité de fixation de la traverse (5, 6) une première partie aplatie (12) sur sa surface d'enveloppe, ladite première partie aplatie (12) s'étendant parallèlement à l'axe du pivot (10) de forme sensiblement cylindrique, et l'espace (13) sensiblement cylindrique du logement de support (8) recevant ledit pivot (10) présentant sur l'éclisse latérale (3, 4) adjacente une partie aplatie (15), celle-ci et aussi la première partie aplatie (12) du pivot (10) étant disposées l'une par rapport à l'autre de sorte que dans la position fermée de la traverse (5, 6) la partie aplatie (15) de l'espace cylindrique (13) et la première partie aplatie (12) du pivot (10) en forme sensiblement cylindrique sont situées en vis à vis.

2. Chaîne de guidage d'énergie selon la revendication 1, **caractérisée en ce que** la première partie aplatie (12) formant en section transversale une sécante du cercle circonscrit du pivot (10) cylindrique, est dimensionnée de telle sorte que le secteur circulaire appartenant à la sécante présente un angle d'au moins 40°.

3. Chaîne de guidage d'énergie selon la revendication 1 ou 2, **caractérisée en ce que** dans la position fermée de la traverse (5, 6), la première partie aplatie (12) du pivot (10) et la partie aplatie (15) de l'espace (13) de forme sensiblement cylindrique du logement de pivot (11) sont juxtaposées.

4. Chaîne de guidage d'énergie selon l'une des revendications 1 à 3, **caractérisée en ce que** le pivot (10) présente une deuxième partie aplatie (16) qui s'étend parallèlement à l'axe du pivot (10) de forme sensiblement cylindrique, ladite deuxième partie aplatie (10) étant disposée de telle sorte que dans la position complètement ouverte de la traverse (5, 6), celle-ci est située en vis à vis de la partie aplatie (15) de l'espace (13) sensiblement cylindrique du logement de pivot (11).

5. Chaîne de guidage d'énergie selon la revendication 4, **caractérisée en ce que** la deuxième partie (16) formant une sécante du cercle circonscrit du pivot (10) sensiblement cylindrique est dimensionnée de telle sorte que le secteur circulaire appartenant à cette sécante présente un angle d'au moins 40°.

6. Chaîne de guidage d'énergie selon la revendication 4 ou 5, **caractérisée en ce que** la première partie aplatie (12) est disposé sous un angle supérieure à 90° par rapport à la deuxième partie aplatie (16) du pivot (10) de forme sensiblement cylindrique, angle qui est balayé lors du pivotement de la traverse (5, 6) entre sa position fermée et sa position complètement ouverte.

7. Chaîne de guidage d'énergie selon l'une des revendications 1 à 6, **caractérisée en ce que** la partie aplatie (15) de l'espace (13) sensiblement cylindrique est disposée à la paroi du logement de pivot (11) adjacente à la face extérieure (3b, 4b) de l'éclisse latérale (3, 4).

8. Chaîne de guidage d'énergie selon la revendication 7, **caractérisée en ce que** la partie aplatie (15) de l'espace (13) sensiblement cylindrique est disposée parallèlement à la face extérieure (3b, 4b) de l'éclisse latérale (3, 4).

9. Chaîne de guidage d'énergie selon l'une des revendications 1 à 8, **caractérisée en ce que** l'espace (13) sensiblement cylindrique du logement de pivot (11) est accessible vers la face étroite adjacente (3c 3d, 4c, 4d) de l'éclisse latérale par une orifice d'introduction (14), par rapport à laquelle l'espace (13) sensiblement cylindrique est élargie de telle manière que le pivot (10) peut s'encliqueter dans l'espace (13) sensiblement cylindrique du logement de pivot (11).

10. Chaîne de guidage d'énergie selon l'une des revendications 1 à 9, **caractérisée en ce que** la traverse (5, 6) présente sur son extrémité de fixation un appendice (9) sur lequel sont disposés deux pivots (10) ayant un axe commun, lesdits pivots (10) respectivement pouvant être insérés dans un logement (11) sous forme de poche disposé sur la face intérieure (3a, 4a) de l'éclisse latérale.
